(19) Europäisches Patentamt / European Patent Office / Office européen des brevets

(11) **EP 3 273 025 B1**

(12) **EUROPEAN PATENT SPECIFICATION**

(45) Date of publication and mention of the grant of the patent:
**27.02.2019 Bulletin 2019/09**

(51) Int Cl.:
***F01N 3/20*** *(2006.01)*          ***G01F 1/40*** *(2006.01)*
***G01F 1/42*** *(2006.01)*

(21) Application number: **17181126.8**

(22) Date of filing: **13.07.2017**

(54) **LAMINAR FLOW MODULE**

LAMINARSTRÖMUNGSMODUL

MODULE À FLUX LAMINAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.07.2016 NL 2017185**

(43) Date of publication of application:
**24.01.2018 Bulletin 2018/04**

(73) Proprietor: **A. de Kock Holding B.V.**
**4003 EC Tiel (NL)**

(72) Inventors:
• **VAN DEURZEN, Hubertus Johannes Maria**
**6822 LA ARNHEM (NL)**

• **DE KOCK, Alwin**
**4003 EC TIEL (NL)**
• **PEETERS, Robert Johannes Theodorus**
**6531 ML NIJMEGEN (NL)**

(74) Representative: **van Dam, Vincent**
**Octrooibureau Vriesendorp & Gaade B.V.**
**Koninginnegracht 19**
**2514 AB Den Haag (NL)**

(56) References cited:
**EP-A1- 0 370 557          WO-A1-01/84029**
**WO-A1-2013/117577          DE-A1- 2 728 697**
**DE-A1-102011 089 502          GB-A- 1 386 417**
**US-A- 3 851 526          US-A1- 2003 034 074**

## Description

The present invention relates to a laminar flow module and a flow meter assembly comprising said laminar flow module, and a selective catalytic reduction system comprising said flow meter. The invention further relates to a method for determining the flow of a fluid using said flow meter.

Flow meters are used for many purposes. In the present invention a flow meter and flow module are provided that are particularly suitable for use in a selective catalytic reduction (SCR) system. The purpose of the SCR system is to reduce levels of $NO_x$ (oxides of nitrogen) in engine exhaust gases. For this purpose an urea solution is injected into the exhaust upstream of a catalytic converter where it vaporizes and decomposes to form ammonia and carbon dioxide. The ammonia, in conjunction with the SCR catalyst, converts the $NO_x$ to harmless nitrogen ($N_2$) and water ($H_2O$).

Urea injection used for the after treatment of engine exhaust gas involves certain difficulties. Factors such as urea temperature, pump pressure, and injector nozzle obstructions can affect the delivery of urea to the exhaust gas flow so that the delivery of the appropriate amount of urea is prevented. This may result in wasteful use of the urea, by providing an excess beyond the required amount, or too little urea to effectively treat the amount of exhaust produced. Exhaust gas after treatment therefore requires accurate control regarding the dosage of the proper amount of urea.

A commonly used means used for controlling the dosage of urea is a flow meter which comprises a flow restriction element. Because of the flow restriction during operation a pressure differential is generated on the basis of which flow can be determined.

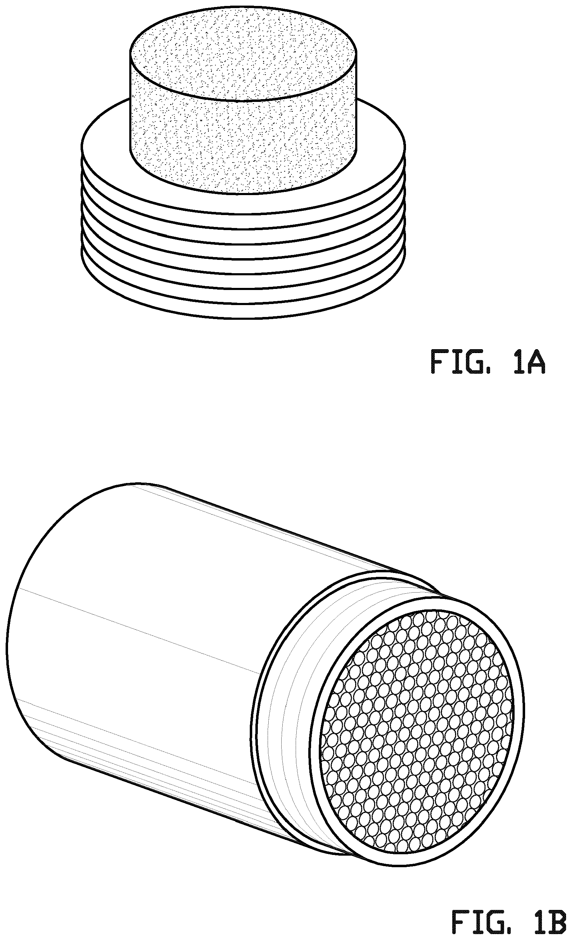

Many designs of restriction elements are known, for instance flow meters may comprise a laminar flow element in the form of sinter metal restrictions (Fig. 1A) or restriction elements which consist of a number of straight parallel channels which are parallel to the flow direction of the fluid in the main channel of the flow meter (Fig 1B). Another design makes use of parallel plates with internal gaskets.

GB 1 386 417 A describes fluid sampling valves comprising a stack of at least two discs in face-to-face abutting relationship housed between the inlet and outlet ends of the valve, each disc having a spiral groove on at least one face and having at least one passage through its thickness communicating with the spiral groove, and the passages through adjacent discs being radially offset one from another so that the grooves are connected together end-to-end in sequence via the passages, fluid flowing through the valve from inlet to outlet being constrained to flow consecutively through the grooves in the discs which form a labyrinth conduit whereby the pressure of the fluid flow is progressively decreased.

DE 27 28 697 A1 describes an expansion valve for liquid or gas having alternately arranged cover and expansion discs.

US 3 851 526 A describes a flowmeter in which a laminar flow conduit is connected in parallel to a flow restrictor comprising at least one disk having an opening through opposite surfaces and at least one conduit from the opening to the perimeter of the disk, each conduit having an effective length to diameter ratio sufficient to assure laminar fluid flow.

DE 10 2011 089502 A1 describes a device for measuring flow rate of fluid such as aqueous urea solution, and for fluid dose arrangement for combustion engines used in vehicles.

The inventors have experienced that there is room for improvement with regard to flow meters in order to meet the specific requirements of SCR systems. Many of the currently available flow elements may be very useful for the measurement of gases, but when used to measure urea flow often the problem of clogging of the restriction element arises. Furthermore, it is often tedious to install a restriction element into a flow meter and often even more difficult to remove the element, for instance for cleaning purposes in case of clogging. Furthermore, in case of SCR systems, high pressure drop may be required in order to acquire a high flow measurement range (turndown ratio at least 20:1). The turndown ratio indicates the range of flow that a flow meter is able to measure with acceptable accuracy.

This may be possible with state of the art flow restriction elements, but in general this will involve large elements. Normally, engine room space is limited, and therefore the dimensions of SCR systems are limited, so it is highly undesirable to use large flow restriction elements. Further, in case gaskets are used in a laminar flow element this involves a risk of leaking. In addition, in case the laminar flow elements are in the form of sinter metal restrictions or if restriction elements are based on a number of straight parallel channels, they will only be suitable for one particular range of flow and cannot be adapted for different flows.

It is therefore an object of the invention to provide a laminar flow module which overcomes these problems, and which is in particularly suitable in a flow meter for measuring the flow of urea in an SCR system. It is a further object of the invention to provide a flow meter that is in particularly suitable to measure the flow of urea containing liquids in an SCR system.

## Summary of the invention

The present invention relates to a laminar flow module, comprising a plurality of disks, defined by first disks and second disks, wherein said first disks comprise an inlet hole and an outlet hole at a distance of each other formed through the first disks, wherein said second disks comprise an inlet hole and an outlet hole at a distance of each other formed through the second disks, wherein the inlet and outlet holes of each second disk are in open connection with each other via a spiral path formed through each second disk, said first disks and second disks being stacked together into a stack of disks in such a manner that said inlet holes of said first disks are in alignment with said inlet holes of said second disks and said outlet holes of said first disks are in alignment with said outlet holes of said second disks, so that an inlet channel and an outlet channel are formed through the stacked plurality of disks, and a housing, wherein the plurality of disks is comprised in said housing, said housing having an inlet hole which is aligned with the inlet channel and an outlet hole which is aligned with the outlet channel; and wherein said inlet channel is closed at its end opposite of the inlet hole of said housing and said outlet channel is closed at its end opposite of the outlet hole of said housing; wherein in the stack of disks multiple spiral channels are formed between the inlet channel and outlet channel by said spiral paths of said second disks enclosed between adjacent first disks and/or enclosed between a first disk and said housing.

The invention further relates to a flow meter comprising the laminar flow module of the invention.

The invention further relates to a selective catalytic reduction (SCR) system comprising the flow meter of the invention, wherein said flow meter is in communication with a controller which is configured to receive a signal from said flow meter based on the flow in said flow meter and to control, based on said signal, a proportional valve so that an appropriate amount of urea solution is injected into an exhaust of an engine upstream of a catalytic converter.

The invention further relates a method for determining the flow of a fluid comprising directing said fluid through the flow meter according to the invention, determining the pressure differential over said laminar flow module and determining the flow of said fluid based on said pressure differential.

## Description of the figures

Fig.1 shows some prior art laminar flow elements. Fig 1A shows a sinter metal laminar flow element. Fig. 1B shows a restriction element consisting of a number of straight parallel channels which are parallel to a flow direction of a fluid in a main channel of a flow meter.

Fig. 2 shows an embodiment of the first (Fig.2A) and second (Fig. 2B) disks of the laminar flow module of the invention.

Fig. 3 shows how an embodiment of the laminar flow module of the invention is assembled.

Fig. 4 shows a cross section of an embodiment of the laminar flow module of the invention.

Fig. 5 shows an embodiment of an assembled laminar flow module of the invention.

Fig. 6 shows a cross section of an embodiment of an assembled laminar flow module of the invention assembled in a flow rate controller system.

## Detailed description

In a first aspect the invention relates to a laminar flow module. The flow module of the invention is a laminar flow module. This gives a large measurement range compared to turbulent flow modules.

The laminar flow module can be used with gases and liquids, but is in particular suitable for liquids. The laminar flow module of the invention is in particularly suitable for use with liquids, in particular liquids containing urea, such as in SCR systems. The housing and disks of the flow module are suitably made of metal, such as stainless steel.

The flow module of the invention comprises a plurality of disks, defined by first disks and second disks. Said first disks comprise an inlet hole and an outlet hole at a distance of each other formed through the first disks. Said second disks, which can also be referred to as restrictor disks, comprise an inlet hole and an outlet hole at a distance of each other formed through the second disks, wherein the inlet and outlet holes of the second disks are in open connection with each other via a spiral path formed through the second disks. In the flow module said first disks and second disks are stacked together into a stack of disks in such a manner that said inlet holes of said first disks are in alignment with said inlet holes of said second disks and said outlet holes of said first disks are in alignment with said outlet holes of said second disks, so that an inlet channel and an outlet channel are formed through the stacked plurality of disks. In the stack of disks multiple spiral channels are formed between the inlet channel and outlet channel by said spiral paths of said second disks enclosed between adjacent first disks and/or enclosed between a first disk and the housing wherein the stack is comprised.

The disks of the module are easy to be removed for cleaning or replacement or rearrangement of the stack. Furthermore, the fact that disks are used makes it possible to make any combination of disks so that the amount of spiral channels enclosed between said first disks can be regulated to match the desired capacity of the flow meter. Moreover, the construction of the laminar flow module of the invention using above defined first and second disks does not require the use of gaskets, thus preventing risk of leakage and making assembly and disassembly of the module easy.

The laminar flow module of the invention is suitable for causing a wide range of pressure drops for a wide range of flow ranges because the number of spiral channels from the inlet channel to the outlet channel can easily be adapted. For instance, because multiple arrangements of disks and various amounts of spiral channels are possible the module can establish a pressure drop of up to +/- 500 mbar for flows of e.g. 6, 9, 15, 21, 27 or 36 l/h of a fluid, such as an urea containing solution. This way the invention makes it possible to achieve high pressure drop over a high flow measurement range. In fact, the inventors have found that a high turndown ratio of at least 20:1 can be obtained. Because of this high pressure drop, standard commercially available pressure sensors can be applied in a flow meter that comprises the flow module of the the invention, which is cost effective. Specially adapted and expensive pressure sensors which would be required in case only low pressure drops could be achieved are not required. The laminar flow module of the invention therefore can be applied to measure a wide range of flows in an accurate way without the necessity of expensive and special equipment that would be required with other laminar flow modules that cannot obtain the above high turndown ratio.

Usually for a higher flow ranges, more spiral channels are preferred, while for lower flow ranges less spiral channels are preferred. The amount of spiral channels in the laminar flow module can be regulated by varying the arrangement of the disks in the stack. For instance the number of spiral channels can be regulated by varying the number of first disks between consecutive second disks in the stack. The more first disks are arranged between consecutive second disks, the less spiral channels are formed and vice versa.

Regarding the arrangement of the disks, it is preferred for purposes of ease of assembly and disassembly and reliability that the spiral channels from the inlet channel to the outlet channel of the stack are formed by sandwiching said second disks with the spiral path between two adjacent first disks without a spiral path. It is even more preferred that the spiral channels from the inlet channel to the outlet channel of the stack are each formed by sandwiching a second disk between adjacent first disks.

It is further preferred that at least a portion of the stack consists of one or more sequence of alternately stacked first and second disks.

More preferably, a portion of the stack consists of one or more sequences of alternately stacked first and second disks while the other portion consists of one or more sequence of first disks. Even more preferably the stack consists of a sequence of alternately stacked first and second disks while the other portion consists of a sequence of first disks. The higher the portion of the sequence(s) of first disks is, the less spiral channels are formed and vice versa.

The spiral design of the laminar flow causing spiral channels in the flow module has the effect that the laminar flow module is very compact. This is of high importance in compact engine rooms. The spiral design of the channels from the inlet channel to the outlet channel of the stack of disks therefore contributes to the fact that the laminar flow module of the invention is in particular suitable for use in SCR systems, where space is limited.

The spiral path in the second disks can be realised by any suitable method. It is preferred that the spiral path is etched through the disks. This can be achieved by means of any method suitable for etching a path through metal disks.

In order to be useful in SCR systems it is preferred that the spiral path of the second disks fulfils certain dimension requirements.

Because of the modular construction of the flow module of the invention the spiral path of the second disks will have a substantially rectangular cross-section having a height and width, i.e. a spiral path cross-section with a size in the direction of the plane of the disks and a size in the direction perpendicular to the plane (or vice versa).

The inventors have found that it is preferred that the path has minimal height and width of 0,1 mm, preferably with a height and/or width of 0,1 mm or more and less than 2 mm, preferably between 0,1 and 1,6 mm, such as 0,2, 0,3, 0,4, 0,5, 0,6, 0,7, 0,8, 0,9, 1,0, 1,1, 1,2, 1,3, 1,4 or 1,5 mm. It is preferred that this is accomplished by the provision of second disks with a thickness of at least 0,1 mm to provide a path with a size in the direction perpendicular to the plane of the disks of at least 0,1 mm and by providing a spiral path with a size in the direction of the plane of the disks of at least 0,1 mm, for instance by etching the path through the disks, so that the spiral channel in the module will have a cross section of at least 0,1 x 0,1 mm. A minimum channel height and width of 0,1 mm is preferred because this way pollution and clogging of the laminar flow module is reduced to a minimum.

If the spiral path through the disks is made by etching, it is preferred that the disks have a limited thickness. This allows precise controlling of the dimensions of the spiral path. It is therefore preferred that the size of the cross section of the spiral path in the direction perpendicular to the plane of the disks is smaller than the size in the direction of the plane of the disks. A suitable cross section may for instance have dimensions of 0,2 mm in the direction perpendicular to the plane of the disks, and +/- 1,2 mm in the direction of the plane of the disks.

Also the length of the spiral path, which is the length a fluid has to travel through a spiral channel of the assembled module from the inlet channel to the outlet channel, is variable. The optimal length of the spiral path is dependent on the laminar pressure drop to be measured at prescribed conditions. Suitable lengths are preferably in the order between 3 mm and 300 mm, for instance between 20 and 250, such as between 40 and 150 mm. A suitable exemplary path may have cross-sectional dimensions of 0,2 mm in the direction perpendicular to the plane of the disks, and +/- 1,2 mm in the direction of the plane of the disks with a length of the spiral path from inlet hole to outlet hole of +/- 67 mm.

It is to be understood that the abovementioned dimensions and preferences for the spiral path are the same for the spiral channels formed between the inlet channel and outlet channel by spiral paths of second disks enclosed between adjacent first disks and/or enclosed between a first disk and the housing of the module.

As mentioned above, the laminar flow module of the invention is suitable for causing a wide range of pressure drops (such as between 200 and 500 mbar or even > 500 mbar) for a wide range of flow ranges. This makes the laminar flow module in particular useful in SCR systems. For instance, the laminar flow module makes it possible that a pressure drop of >500 mbar can be obtained at a laminar flow using a liquid with a viscosity of $1,4 \times 10^{-3}$ pa.s at 20°C. Such viscosity is exemplary for a solution of 32,5% urea in demineralised water. These parameters are in the range that is applied in SCR systems. It is to be understood that also other pressure drops, viscosities and solutions that may be suitable in SCR systems and that the flow module is also suitable for flow measurement in other systems.

The inventors have found that specific ratios between length of the spiral path and the width and height of the spiral path lead to particular high performances in SCR systems. It has been found that for measurement of flow of an urea containing liquid (such as in SCR systems) particular excellent performance with regard to high turndown ratio and pressure drop is achieved if the dimensions of the spiral channels fulfil the following relation (I): $C_p > \dfrac{(The\ smaller\ of\ X1\ and\ X2)^3}{L}$

wherein $C_p = 3,0 \times 10^{-4}$; X1 is the span of the cross-section of the channel in the direction perpendicular to the plane of the disks or the span of the cross-section of the channel in the direction of the plane of the disks [in mm]; X2 is the span of the cross-section of the channel [in mm] in the direction perpendicular to the direction of X1; and L is the length of the channel [in mm]. With "the smaller of X1 and X2" is meant that if for instance X1 is smaller than X2, X1 is taken as value in the numerator of this relation, i.e. as follows: $C_p > \dfrac{(X1)^3}{L}$ For optimal turndown ratio and pressure drop and prevention of pollution and clogging of the laminar flow module it is preferred that in relation (I) L, X1 and X2 have the values as indicated above for the length, height and width of the spiral channels.

In particular in case the spiral channels are obtained with disks that have a spiral path obtained by metal etching, it is preferred that X1 is the span of the channel cross-section in the direction of the plane of the disks and that X2 is the span of the cross-section of the channel in the direction perpendicular to the plane of the disks, i.e. the thickness of the disk, wherein: X1 > X2.

This is because it is preferred to have a relatively thin disk, which allows precise etching. In this case, X2 is taken as numerator in relation (I), i.e. as follows:

$$C_p > \dfrac{(X2)^3}{L}$$

Exemplary suitable dimensions of the spiral channel in accordance with relation (I) are given in table 1 below.

Table 1: suitable dimensions of spiral channel - preferred minimal channel length with predetermined heights and widths, (wherein X1 is the span of the cross-section of the spiral channel in the direction of the plane of the disks and X2 is the span of the cross-section of the spiral channel in the direction perpendicular to the plane of the disks). $C_p$ is $3,0 \times 10^{-4}$.

| The smaller of X1 and X2 (mm) | Preferred minimal path length (mm) |
|---|---|
| 0,1 | 3 |
| 0,15 | 11 |
| 0,2 | 27 |
| 0,25 | 52 |
| 0,3 | 90 |

Optimal results are obtained when in relation (I) $C_p = 1,5 \times 10^{-4}$. In that case exemplary suitable dimensions of the spiral channel in accordance with relation (I) can be as shown in table 2 below.

Table 2: suitable dimensions of spiral channel - preferred minimal channel length with predetermined heights and widths, (wherein X1 is the span of the cross-section of the spiral channel in the direction of the plane of the disks and X2 is the span of the cross-section of the spiral channel in the direction perpendicular to the plane of the disks). $C_p$ is $1,5 \times 10^{-4}$.

| The smaller of X1 and X2 (mm) | Preferred minimal path length (mm) |
|---|---|
| 0,1 | 7 |
| 0,15 | 23 |
| 0,2 | 53 |
| 0,25 | 104 |
| 0,3 | 180 |

It follows from table 2 that if Cp = $1,5 \times 10^{-4}$ the length of the spiral channel is higher for the same height/width values compared to the length values in table 1.

A relatively longer length of the spiral channel has the effect that a higher pressure drop can be measured for a particular flow. This is advantageous for the accuracy of measurement over the measurement range, so that a higher turndown ratio is achieved.

The plurality of disks is comprised in a housing. This said housing has an inlet hole which is aligned with the inlet channel of the stack of disks and an outlet hole which is aligned with the outlet channel of the stack of disks. The inlet channel of the stack is closed at its end opposite of the inlet hole of the housing and the outlet channel is closed at its end opposite of the outlet hole of said housing. This way fluid flowing from the inlet hole of the housing is forced to flow through the spiral channels contained in the sandwiched second disks to the outlet channel of the stack, resulting in a laminar flow. As the outlet channel of the stack is closed at its end opposite of the outlet hole of said housing the fluid entering the outlet channel can only flow out of the stack through the outlet hole of the housing to the outside of the laminar flow module. For the sake of efficiency and to limit the amount of required materials as much as possible, it is preferred that the inlet channel of the stack is closed at its end opposite of the inlet hole of the housing by the wall of the housing. In line with this, it is also preferred that the outlet channel of the stack is closed at its end opposite of the outlet hole of said housing by the wall of the housing.

The assembly of the stack of disks in a housing has the advantage that the complete laminar flow module can easily be assembled in the system wherein it is used, such as a flow meter, such as a flow meter in a SCR system. The module can be produced in a production factory and be assembled in a system at a different location.

The stack of disks should be mounted in a housing in such a manner that it is easy to be removed for cleaning or replacement or rearrangement of the stack. In this respect it is highly preferred that the housing comprises multiple components that can be easily assembled and disassembled. In a preferred embodiment, the housing comprises a cup portion wherein the stack of disks is contained and a lid portion which closes the cup. The cup and lid can be assembled together by means of any suitable means, such as a bolt. In this respect it is preferred that the cup and lid contain a number of further holes and that the disks contain a number of further holes or recesses in the circumference thereof, wherein the further holes or recesses in the circumference of the disks are aligned with the further holes in the cup and lid so that an assembly channel is formed, through which an assembly means extends which holds the cup and lid together and which holds the stack of disks at a fixed position in the housing. Suitable assembly means in this respect may be screws or bolts. In this respect it is preferred that the further holes of the cup and lid contain screw-threads for easy assembly and disassembly.

The invention further relates to a flow meter comprising the laminar flow module of the invention. The flow meter is a differential pressure type flow meter. The advantages of a differential pressure type flow meter are that the construction is robust and simple, that it can be used to meter a wide variety of fluids and gases; and that the technique is well known in the art, which renders it easy for a skilled person to adapt a flow meter for his own specific purposes. Preferably such a flow meter has a configuration in which two pressure sensors are arranged in series via the laminar flow module of the invention, so that the pressures of the fluid before entry of the module and after passing the module can be determined so that the flow can be calculated from the resulting differential pressure (or pressure drop). Flow and density of fluid changes with temperature, which can affect the accuracy of the measured flow rate if it is uncompensated. Therefore it is preferred that the differential pressure is compensated for the temperature. For this purpose, it is preferred that the flow meter also comprises a temperature sensor provided upstream or downstream of the laminar flow module to measure the temperature of the fluid passing in or passed through the flow module. Calculation of the flow may be performed by means of methods that are known in the art using equipment and software that are known to the skilled person.

The laminar flow module of the invention provides a cost effective and easy to manufacture module for use in a laminar flow meter and/or in a method for determining the flow of an urea containing liquid in a selective catalytic reduction (SCR) system. The invention therefore also relates to a selective catalytic reduction (SCR) system comprising the flow meter of the invention, wherein said flow meter is in communication with a controller which is configured to receive a signal from said flow meter based on the flow in said flow meter and to control, based on said signal, a dosing system so that an appropriate amount of urea solution is injected into an exhaust of an engine upstream of a catalytic converter. In this respect, the values obtained by the pressure sensors and preferably a temperature sensor are converted to electric signals which are submitted to a control unit. In such a control unit the volume of the flow passing through the midpoint of the laminar flow element is determined. Based on the pressure drop measured over the flow module, optionally corrected for the temperature, the controller can control a dosing system, such as a proportional valve. The controller controls the dosing system such that the appropriate amount of urea solution is injected into the exhaust upstream of a catalytic converter where it vaporizes and decomposes to form ammonia and carbon dioxide after which the ammonia in conjunction with an SCR catalyst converts $NO_x$ to harmless nitrogen ($N_2$) and water ($H_2O$).

The invention further relates a method for determining the flow of a fluid comprising directing said fluid through the flow meter according to the invention, determining the pressure differential over said laminar flow module and determining the flow of said fluid based on said pressure differential.

For the reasons mentioned above, this method is in particularly suitable for liquids, more in particular a liquid containing urea, such as a 15 to 40% urea solution, for instance a 32,5 weight % urea solution in demineralised water, so that the method is very suitable for determining the flow of a liquid in a SCR system.

## Exemplary embodiments

The invention will now be further elucidated in the attached drawings. The following explanation is meant to illustrate and explain the invention and not to limit the claims.

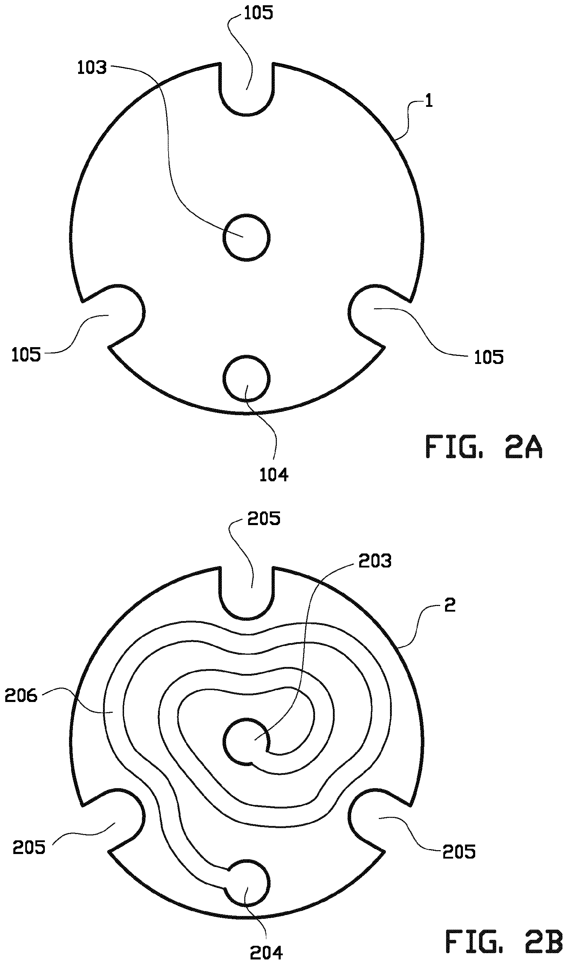

The laminar flow module according to this embodiment of the invention comprises a plurality of disks defined by first disks and second flat circular disks. As shown in Fig 2A the first disks 1 of this embodiment have two holes through the disk, an inlet hole 103 and an outlet hole 104. The holes are at a distance of each other. Recesses 105 are made in the circumference of the disks for assembly purposes.

As shown in Fig. 2B, the second disks 2 (or restrictor disks) of this embodiment also have two holes through the disk, which can be assigned as inlet hole 203 and outlet hole 204. A spiral path 206 through the second disks 2 forms an open connection between the inlet hole 203 and the outlet hole 204. Recesses 205 are made in the circumference of the disks for assembly purposes. The two holes 103, 104 of the first disks 1 and the two holes 203, 204 of the second disks 2 are positioned at an equal distance of each other so that when the disks are stacked the inlet holes 103 and 203 can be aligned with each other and the outlet holes 104 and 204 can be aligned with each other.

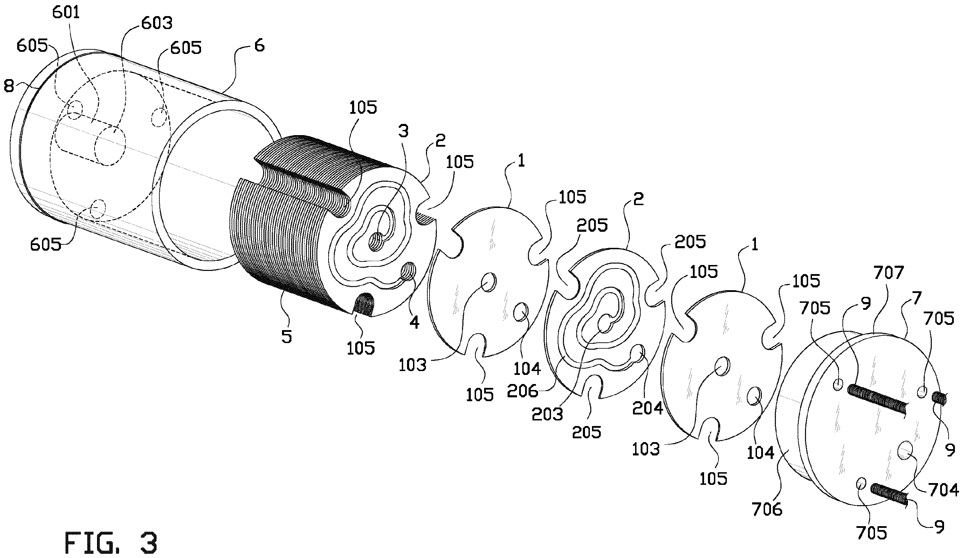

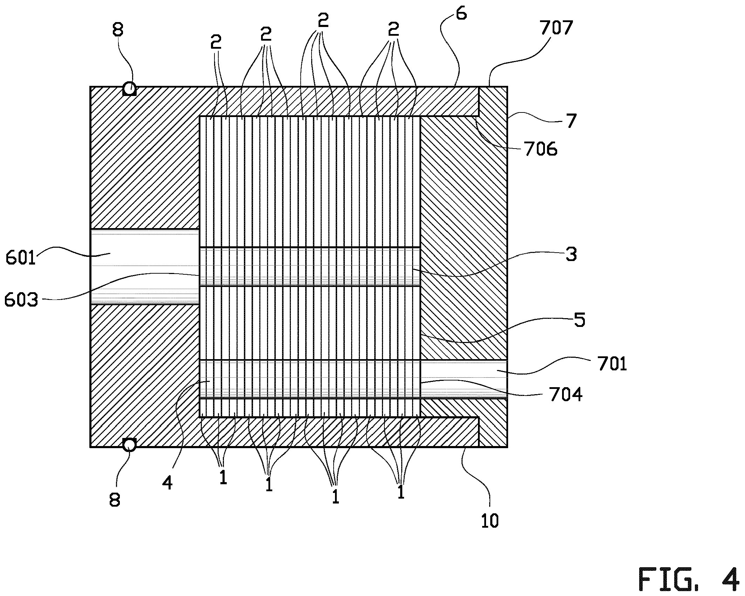

As shown in Fig. 3 and 4 in the laminar flow module 10 the first disks 1 and second disks 2 are alternately stacked together, so that the second disks 2 with the spiral path 206 are sandwiched between first disks 1. The inlet holes 103 and 203 are aligned with each other and the outlet holes 104 and 204 are aligned with each other. Because the inlet holes and outlet holes of adjacent disks are aligned an inlet channel 3 and an outlet channel 4 are formed. Stack 5 contains multiple of these sandwich constructions. Because the spiral paths 206 are enclosed between first disks 1, multiple spiral canals are formed that extend from the inlet channel 3 to the outlet channel 4. Also recesses 105 and 205 of the first and second disks are aligned. In the embodiments shown in Fig. 3 and fig. 4 all first and second disks are stacked alternately. It will be understood that alternative arrangements are possible as long as the stack comprises multiple sandwich constructions so that multiple spiral channels from the inlet channel to the outlet channel are formed so that laminar flow of the fluid flowing through the laminar flow module is effected. For instance the stack may comprise multiple first disks between consecutive second disks. Another alternative is that a first portion of the stack comprises first and second disks alternately stacked, while an end portion only comprises first disks. This flexibility in stacking arrangements makes it possible to control the number of second disks depending on the desired flow measurement range.

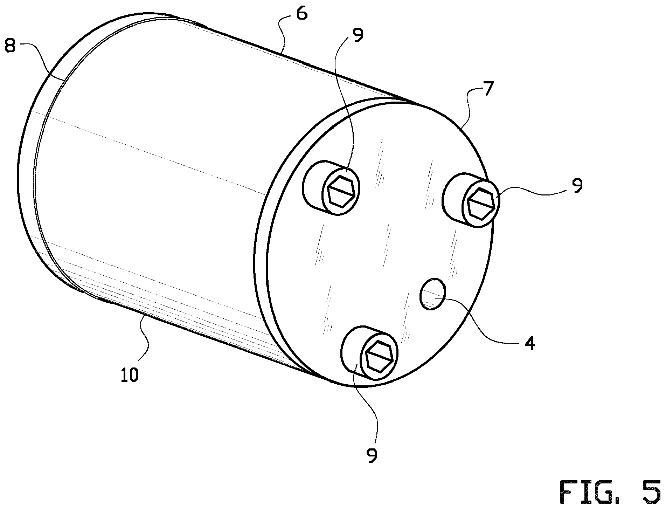

The stack of disks is contained in a housing. In the present embodiment the housing comprises a cup portion 6 and a lid portion 7. The cup portion 6 contains an inlet 601 with an inlet hole 603, which inlet hole is aligned with the inlet channel 3 of the stack of disks, or in other words, aligned with the inlet holes 103 and 203 of the first and second disks. The cup portion 6 also contains holes 605 that are aligned with recesses 105 and 205 of the disks. In this embodiment the cup portion also contains a sealing ring 8 in order to be able to assemble the module sealingly into a flow meter assembly. The stack of disks is fittingly positioned in the cup portion such that all fluid from the inlet hole 603 of the cup enters the inlet channel 3. The housing also comprises a lid portion 7. The lid portion 7 contains an outlet 701 with an outlet hole 704, which outlet hole is aligned with the outlet channel 4 of the stack of disks, or in other words, aligned with the outlet holes 104 and 204 of the first 1 and second disks 2. The lid portion 7 also contains holes 705 that are aligned with recesses 105 and 205 of the disks so that holes 705 are also aligned with holes 605 of the cup portion. The lid portion comprises a protruding portion 706 of which the circumference is a bit smaller than the inner circumference of the cup portion and a covering portion 707 so that the protruding portion 706 can be slid into the cup. The protruding portion 706 is placed in the cup portion 6 such that all fluid flowing from the outlet channel enters the outlet hole 704 of the lid portion 7. The cup portion and the lid portion can be assembled using a bolt 9 (shown in part) which extends through holes 705 of the lid portion, recesses 105 and 205 of the stack of disks and holes 605 of the cup portion. For this purpose the holes 605 and/or 705 can be provided with a screw-thread. Apart from assembling the lid and cup portion, the bolt ascertains that the disks in the stack are held in place so that the inlet holes 103, 203 and outlet holes 104, 204 are held aligned to form inlet channels 3 and outlet channels 4 respectively. The assembled laminar flow module 10 is shown in Fig. 5.

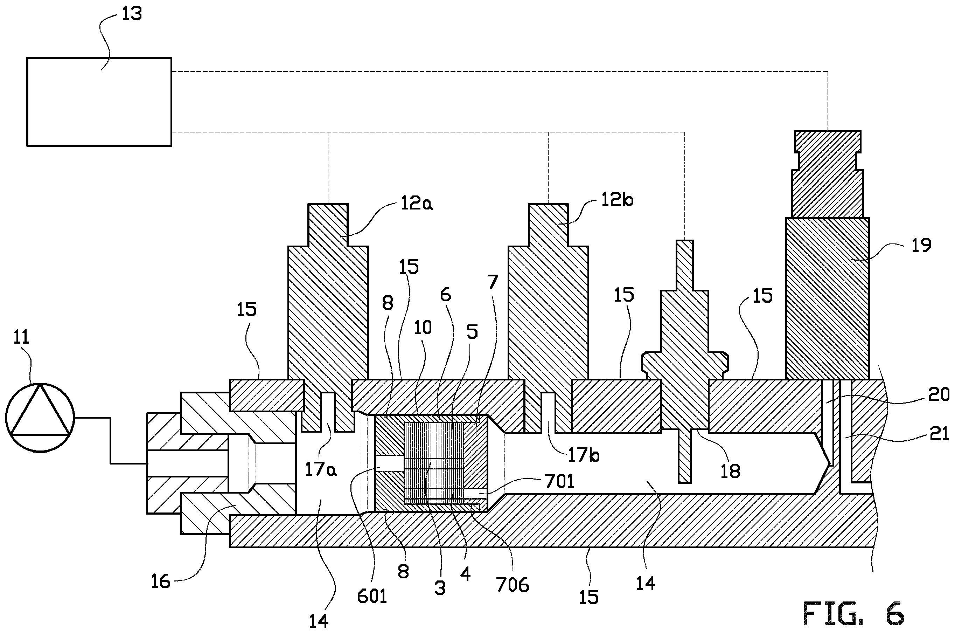

The flow module 10 can be assembled into a flow meter. A simplified representation of a suitable embodiment of such a flow meter in a flow rate controller system using a flow meter of the differential pressure type is schematically represented in Fig. 6. A flow of fluid is passed with constant pressure through the system by means of a pump 11. The differential pressure type flow meter has a configuration in which a pair of pressure sensors 12A and 12B are arranged in series via the laminar flow module 10 of the invention. In this differential pressure type flow meter, the fluid pressures before and after having passed through the laminar flow module 10 are detected by the two pressure sensors 12A and 12B, and these two pressure values are converted respectively into electric signals and input to a control unit 13. The control unit 13 having received signal input of the pressure values in this manner is able to measure the flow rate of the fluid flowing through the flow meter by converting the differential pressure obtained from the two pressure values into the flow rate. For convenience sake, the pressure sensor 12A which is arranged on the upstream side of the laminar flow module 10 is referred to as a first sensor, and the pressure sensor 12B which is arranged on the downstream side of the laminar flow module 10 is referred to as a second sensor. The flow rate controller system in fig. 6 has a housing 15 in which the laminar flow module of the invention 10 is assembled. Fluid enters the flow meter via nozzle 16, which may have a filter mounted into it, into primary flow channel 14. From primary flow channel 14 it enters pressure introduction flow channel 17A of a first pressure sensor 12A mounted upstream of flow module 10, so that the first sensor can detect the fluid pressure. From primary flow channel 14 the fluid also enters and inlet 601 of the flow module 10. In the flow module 10 the fluid enters the inlet channel 3 which is in connection with outlet channel 4 via spiral channels 206. Because channel 3 is closed by the protruding portion 706 of lid 7, the fluid is forced to enter the multiple spiral channels 206 that are formed by sandwiching second disk 2 between first disks 1 as shown in Figs. 3 and 4. This way a laminar flow is caused. After passing spiral channels 206 the fluid enters outlet channel 4 of the flow module from which it is passed via outlet 701 of the lid 7 of the flow module 10 into the primary flow channel 14 downstream of the flow meter. From here it enters pressure introduction flow channel 17B of a second pressure sensor 12B mounted downstream of flow module 10, so that the second sensor can detect the fluid pressure, which will, because of the laminar flow caused in the laminar flow module 10, be lower than the pressure detected in the first sensor 12A. Flow and density of fluid changes with temperature which can affect the accuracy of the measured flow rate if it is uncompensated. Therefore it is preferred that the differential pressure is compensated for the temperature. For this purpose, in the primary flow channel 14 downstream of the flow meter also a temperature sensor 18 is provided to measure the temperature of the fluid passed through the flow module 10. The combination of first and second pressure sensors 12A and 12B and temperature sensor 18 allows measuring the differential pressure across the laminar flow element generated by the flow passing through it and correcting for changes in the fluid viscosity caused by temperature. The values obtained by first and second pressure sensors 12A and 12B and temperature sensor 18 are converted to electric signals which are submitted to control unit 13. In control unit 13 differential pressure is corrected for the temperature and used as the independent variable in a polynomial fit to determine the volume of the flow passing through the laminar flow element. Based on the pressure drop measured over the flow module 10, corrected for the temperature, the controller 13 is designed such that it can control a proportional valve 19 in which the fluid can enter via proportional valve inlet 20. The controller controls the proportional valve 19 such that the appropriate amount of fluid is passed via proportional valve outlet 21 to a system where it is used. Such a system may for instance be a SCR system using as a fluid a liquid urea solution. In this case the controller 13 submits a signal to the proportional valve 19 so that an appropriate amount of urea solution is injected into the exhaust upstream of a catalytic converter where it vaporizes and decomposes to form ammonia and carbon dioxide after which the ammonia in conjunction with an SCR catalyst can converts $NO_x$ to harmless nitrogen ($N_2$) and water ($H_2O$).

**Claims**

1. A laminar flow module (10), comprising
   a plurality of disks, defined by first disks (1) and second disks (2),
   wherein said first disks comprise an inlet hole (103) and an outlet hole (104) at a distance of each other formed through the first disks (1),
   wherein said second disks (2) comprise an inlet hole (203) and an outlet hole (204) at a distance of each other formed through the second disks (2), wherein the inlet and outlet holes of each second disk (2) are in open connection with each other via a spiral path (206) formed through each second disk (2), and

a housing (6, 7), wherein the plurality of disks is comprised in said housing (6, 7);

**characterized by**

said first disks (1) and second disks (2) being stacked together into a stack of disks in such a manner that said inlet holes (103) of said first disks (1) are in alignment with said inlet holes (203) of said second disks (2) and said outlet holes (104) of said first disks (1) are in alignment with said outlet holes (204) of said second disks (2), so that an inlet channel (3) and an outlet channel (4) are formed through the stacked plurality of disks, and

said housing (6, 7) having an inlet hole (603) which is aligned with the inlet channel (3) and an outlet hole (704) which is aligned with the outlet channel (4); and wherein said inlet channel (3) is closed at its end opposite of the inlet hole (603) of said housing and said outlet channel (4) is closed at its end opposite of the outlet hole (704) of said housing (6, 7);

wherein in the stack of disks multiple spiral channels are formed between the inlet channel (3) and outlet channel (4) by said spiral paths (206) of said second disks (2) enclosed between adjacent first disks (1) and/or enclosed between a first disk (1) and said housing (6, 7).

2. The laminar flow module (10) according to claim 1, wherein the spiral channels from the inlet channel (3) to the outlet channel (4) of the stack are each formed by sandwiching a second disk (2) between adjacent first disks (1) .

3. The laminar flow module (10) according to claim 1 or 2, wherein at least a portion of the stack of disks consists of one or more sequences of alternately stacked first (1) and second disks (2).

4. The laminar flow module (10) according to any of the claims 1 to 3, wherein the portion of the stack consists of a sequence of alternately stacked first and second disks (1, 2) while the other portion consists of a sequence of stacked first disks (1).

5. The laminar flow module (10) according to any of the claims 1 to 4, wherein the second disks (2) have a thickness of 0,1 mm or more.

6. The laminar flow module (10) according to any of the claims 1 to 5, wherein the dimensions of the spiral channels fulfil relation (I) : $C_p > \dfrac{(The\ smaller\ of\ X1\ and\ X2)^3}{L}$ wherein $C_p = 3,0 \times 10^{-4}$, preferably wherein $C_p = 1,5 \times 10^{-4}$;

   X1 is the span of the cross-section of the channel in the direction perpendicular to the plane of the disks, or the span of the cross-section of the channel in the direction of the plane of the disks [in mm];
   X2 is the span of the cross-section of the channel [in mm] in the direction perpendicular to the direction of X1; and
   L is the length of the channel [in mm].

7. The laminar flow module (10) according to any of the claims 1 to 6, wherein Cp is $1,5 \times 10^{-4}$.

8. The laminar flow module (10) according to claim 6, wherein X1 is the span of the channel cross-section in the direction of the plane of the disks and X2 is the span of the cross-section of the channel in the direction perpendicular to the plane of the disks, wherein: X1 > X2.

9. The laminar flow module (10) according to any of the claims 1 to 8, wherein height and width of the spiral channels are 0,1 mm or more and less than 2 mm and wherein the length of the spiral channels is between 3 mm and 300 mm.

10. The laminar flow module (10) according to any of the claims 1 to 9, wherein the housing (6, 7) comprises a cup portion (6) containing the stack of disks and a lid portion (7) which closes the cup.

11. The laminar flow module according to any of the claims 1 to 10, wherein the cup and lid (6, 7) contain a number of further holes (605, 705) and wherein the disks contain a number of further holes or recesses in the circumference thereof (105, 205), wherein the further holes or recesses (105, 205) in the circumference of the disks are aligned with said further holes in the cup and lid (605, 705) so that an assembly channel is formed, through which an assembly means (9) extends which holds the cup and lid together and which holds the stack of disks at a fixed position in the housing (6, 7).

12. A flow meter comprising the laminar flow module (10) according to any of the claims 1-11, preferably wherein the flow meter has a configuration in which two pressure sensors (12A, 12B) are arranged in series via the laminar flow module (10) according to any of the claims 1-11, and/or wherein the flow meter also comprises a temperature sensor (18) provided upstream or downstream of the laminar flow module (10).

13. Selective catalytic reduction (SCR) system comprising the flow meter according to claim 12, wherein said flow meter is in communication with a controller (13) which is configured to receive a signal from said flow meter based on the flow in said flow meter and to control, based on said signal, a dosing system (19, 20, 21) so that an appropriate amount of urea solution is injected into an exhaust of an engine upstream of a catalytic converter.

14. A method for determining the flow of a fluid comprising directing said fluid through a flow meter according to claim 12, determining the pressure differential over said laminar flow module (10) and determining the flow of said fluid based on said pressure differential.

15. The method according to claim 14, wherein the fluid is a liquid, preferably wherein the fluid is a liquid containing urea, such as a 15-40 weight % urea solution in demineralised water.


**Patentansprüche**

1. Ein Laminarströmungsmodul (10), umfassend
eine Vielzahl von Scheiben, die durch erste Scheiben (1) und zweite Scheiben (2) definiert sind,
wobei die ersten Scheiben eine Einlassöffnung (103) und eine Auslassöffnung (104) in einem Abstand voneinander, die durch die ersten Scheiben (1) gebildet werden, aufweisen,
wobei die zweiten Scheiben (2) eine Einlassöffnung (203) und eine Auslassöffnung (204) in einem Abstand voneinander, die durch die zweiten Scheiben (2) gebildet werden, aufweisen, wobei die Einlass- und Auslassöffnungen jeder zweiten Scheibe (2) über einen Spiralweg (206), der durch jede zweite Scheibe (2) gebildet wird, miteinander in offener Verbindung stehen, und
ein Gehäuse (6, 7), wobei die Mehrzahl der Scheiben in dem Gehäuse (6, 7) vorliegen,
**dadurch gekennzeichnet, dass**
die ersten Scheiben (1) und die zweiten Scheiben (2) zu einem Stapel von Scheiben derart zusammen gestapelt werden, dass die Einlassöffnungen (103) der ersten Scheiben (1) an den Einlassöffnungen (203) der zweiten Scheiben (2) ausgerichtet sind und die Auslassöffnungen (104) der ersten Scheiben (1) an den Auslassöffnungen (204) der zweiten Scheiben (2) ausgerichtet sind, so dass durch die gestapelte Mehrzahl von Scheiben ein Einlasskanal (3) und ein Auslasskanal (4) gebildet werden, und
wobei das Gehäuse (6, 7) eine Einlassöffnung (603), die an dem Einlasskanal (3) ausgerichtet ist, und eine Auslassöffnung (704), die an dem Auslasskanal (4) ausgerichtet ist, aufweist, und wobei der Einlasskanal (3) an seinem der Einlassöffnung (603) des Gehäuses gegenüberliegenden Ende geschlossen ist und der Auslasskanal (4) an seinem der Auslassöffnung (704) des Gehäuses (6, 7) gegenüberliegenden Ende geschlossen ist,
wobei in dem Scheibenstapel durch die Spiralpfade (206) der zweiten Scheiben (2), die zwischen anliegenden ersten Scheiben (1) eingeschlossen sind und / oder zwischen einer ersten Scheibe (1) und dem Gehäuse (6 ,7) eingeschlossen sind, mehrere Spiralkanäle zwischen dem Einlasskanal (3) und dem Auslasskanal (4) gebildet werden.

2. Laminarströmungsmodul (10) nach Anspruch 1, wobei die Spiralkanäle von dem Einlasskanal (3) zu dem Auslasskanal (4) des Stapels jeweils durch Dazwischensetzen einer zweiten Scheibe (2) zwischen benachbarten ersten Scheiben (1) gebildet sind.

3. Laminarströmungsmodul (10) nach Anspruch 1 oder 2, wobei wenigstens ein Teil des Scheibenstapels aus einer oder mehreren Folgen alternierend gestapelter erster (1) und zweiter (2) Scheiben besteht.

4. Laminarströmungsmodul (10) nach einem der Ansprüche 1 bis 3, wobei der Teil des Stapels aus einer Folge von alternierend gestapelten ersten und zweiten Scheiben (1, 2) besteht, während der andere Teil aus einer Folge von gestapelten ersten Scheiben (1) besteht.

5. Laminarströmungsmodul (10) nach einem der Ansprüche 1 bis 4, wobei die zweiten Scheiben (2) eine Dicke von 0,1 mm oder mehr aufweisen.

**6.** Laminarströmungsmodul (10) nach einem der Ansprüche 1 bis 5, wobei die Abmessungen der Spiralkanäle die Beziehung (I) erfüllen:

$$C_p > \frac{(das\ Kleinere\ von\ X1\ und\ X2)}{L}^3$$

worin Cp = 3,0 x 10⁻⁴, vorzugsweise Cp = 1,5 x 10⁻⁴ ist,
X1 die Spanne des Querschnitts des Kanals in der Richtung senkrecht zu der Ebene der Scheiben, oder die Spanne des Querschnitts des Kanals in Richtung der Ebene der Scheiben [in mm] ist;
X2 die Spanne des Querschnitts des Kanals [in mm] in der Richtung senkrecht zu der Richtung von X1 ist, und
L die Länge des Kanals [in mm] ist.

**7.** Laminarströmungsmodul (10) nach einem der Ansprüche 1 bis 6, wobei Cp 1,5 x 10⁻⁴ ist.

**8.** Laminarströmungsmodul (10) nach Anspruch 6, wobei X1 die Spanne des Querschnitts des Kanals in der Richtung der Ebene der Scheiben ist und X2 die Spanne des Querschnitts des Kanals in der Richtung senkrecht zur Ebene der Scheiben ist, wobei: X1> X2 ist.

**9.** Laminarströmungsmodul (10) nach einem der Ansprüche 1 bis 8, wobei die Höhe und die Breite der Spiralkanäle 0,1 mm oder mehr und weniger als 2 mm beträgt und wobei die Länge der Spiralkanäle zwischen 3 mm und 300 mm beträgt.

**10.** Laminarströmungsmodul (10) nach einem der Ansprüche 1 bis 9, wobei das Gehäuse (6, 7) einen Becherteil (6) aufweist, der den Scheibenstapel enthält, und einen Deckelteil (7), der den Becher verschließt.

**11.** Laminarströmungsmodul (10) nach einem der Ansprüche 1 bis 10, wobei der Becher und der Deckel (6, 7) eine Anzahl weiterer Öffnungen (605, 705) aufweisen und wobei die Scheiben eine Anzahl weiterer Öffnungen oder Vertiefungen in ihrem Umfang (105, 205) umfassen, wobei die weiteren Öffnungen oder Vertiefungen (105, 205) in dem Umfang der Scheiben an den weiteren Öffnungen in dem Becher und dem Deckel (605, 705) ausgerichtet sind, so dass ein Montagekanal gebildet wird, durch den sich ein Montagemittel (9) erstreckt, das den Becher und den Deckel zusammenhält und das den Scheibenstapel an einer festen Position im Gehäuse (6, 7) hält.

**12.** Durchflussmesser, der das Laminarströmungsmodul (10) nach einem der Ansprüche 1 bis 11 umfasst, wobei der Durchflussmesser vorzugsweise eine Konfiguration aufweist, in der zwei Drucksensoren (12A, 12B) über das Laminarströmungsmodul (10) nach einem der Ansprüche 1 bis 11 in Reihe angeordnet sind, und / oder wobei der Durchflussmesser auch einen Temperatursensor (18) umfasst, der in Fließrichtung vor oder hinter dem Laminarströmungsmodul (10) vorliegt.

**13.** Selektives katalytisches Reduktionssystem (SCR-System), umfassend den Durchflussmesser nach Anspruch 12, wobei der Durchflussmesser mit einer Kontrolleinheit (13) in Verbindung steht, die so konfiguriert ist, dass sie von dem Durchflussmesser ein Signal, basierend auf dem Durchfluss in dem Durchflussmesser, empfängt, und, basierend auf diesem Signal ein Dosiersystem (19, 20, 21) steuert, so dass eine geeignete Menge Harnstofflösung in einen Auslass eines Motors in Fließrichtung vor einem Katalysators eingespritzt wird.

**14.** Verfahren zum Bestimmen des Strömens eines Mediums, umfassend das Hindurchleiten des Mediums durch einen Durchflussmesser nach Anspruch 12, das Bestimmen der Druckdifferenz über das Laminarströmungsmodul (10) und das Bestimmen des Strömens des Mediums auf Basis dieses Druckunterschieds.

**15.** Verfahren nach Anspruch 14, wobei das Medium eine Flüssigkeit ist, wobei vorzugsweise das Medium eine Harnstoff enthaltende Flüssigkeit ist, wie etwa eine 15 bis 40 Gew.-% ige Harnstofflösung in entmineralisiertem Wasser.

**Revendications**

**1.** Module d'écoulement laminaire (10), comprenant
une pluralité de disques, définis par des premiers disques (1) et des seconds disques (2),
dans lequel lesdits premiers disques comprennent un trou d'entrée (103) et un trou de sortie (104) à distance l'un de l'autre formés à travers les premiers disques (1),

dans lequel lesdits seconds disques (2) comprennent un trou d'entrée (203) et un trou de sortie (204) à distance l'un de l'autre formés à travers les seconds disques (2), dans lequel les trous d'entrée et de sortie de chaque second disque (2) sont en liaison ouverte les uns avec les autres via un chemin en spirale (206) formé à travers chaque second disque (2), et

un logement (6, 7), la pluralité de disques étant comprise dans ledit logement (6, 7) ;

**caractérisé en ce que**

lesdits premiers disques (1) et lesdits seconds disques (2) sont empilés ensemble selon un empilement de disques de sorte que lesdits trous d'entrée (103) desdits premiers disques (1) soient en alignement avec lesdits trous d'entrée (203) desdits seconds disques (2) et lesdits trous de sortie (104) desdits premiers disques (1) soient en alignement avec lesdits trous de sortie (204) desdits seconds disques (2), de sorte qu'un canal d'entrée (3) et un canal de sortie (4) soient formés à travers la pluralité de disques empilés, et

ledit logement (6, 7) ayant un trou d'entrée (603) qui est aligné avec le canal d'entrée (3) et un trou de sortie (704) qui est aligné avec le canal de sortie (4) ; et dans lequel ledit canal d'entrée (3) est fermé à son extrémité opposée au trou d'entrée (603) dudit logement et ledit canal de sortie (4) est fermé à son extrémité opposée au trou de sortie (704) dudit logement (6, 7) ;

dans lequel dans l'empilement de disques, de multiples canaux en spirale sont formés entre le canal d'entrée (3) et le canal de sortie (4) par lesdits chemins en spirale (206) desdits seconds disques (2) enserrés entre des premiers disques (1) adjacents et/ou enserrés entre un premier disque (1) et ledit logement (6, 7).

2. Module d'écoulement laminaire (10) selon la revendication 1, dans lequel les chemins en spirale allant du canal d'entrée (3) au canal de sortie (4) de l'empilement sont chacun formés en interposant un second disque (2) entre des premiers disques (1) adjacents.

3. Module d'écoulement laminaire (10) selon la revendication 1 ou 2, dans lequel au moins une partie de l'empilement de disques consiste en une ou plusieurs séquences de premiers (1) et seconds (2) disques empilés en alternance.

4. Module d'écoulement laminaire (10) selon l'une quelconque des revendications 1 à 3, dans lequel la partie de l'empilement consiste en une séquence de premiers (1) et seconds (2) disques empilés en alternance, alors que l'autre partie consiste en une séquence de premiers disques (1) empilés.

5. Module d'écoulement laminaire (10) selon l'une quelconque des revendications 1 à 4, dans lequel les seconds disques (2) ont une épaisseur de 0,1 mm ou plus.

6. Module d'écoulement laminaire (10) selon l'une quelconque des revendications 1 à 5, dans lequel les dimensions des canaux en spirale satisfont la relation (I) : $C_p > \dfrac{(Le\ plus\ petit\ de\ X1\ et\ X2)^3}{L}$

dans laquelle $C_p$ = 3,0 x 10$^{-4}$, de préférence $C_p$ = 1,5 x 10$^{-4}$ ;

X1 est l'étendue de la section transversale du canal dans la direction perpendiculaire au plan des disques, ou l'étendue de la section transversale du canal dans la direction du plan des disques [en mm] ;

X2 est l'étendue de la section transversale du canal [en mm] dans la direction perpendiculaire à la direction de X1 ; et

L est la longueur du canal [en mm].

7. Module d'écoulement laminaire (10) selon l'une quelconque des revendications 1 à 6, dans lequel Cp vaut 1,5 x 10$^{-4}$.

8. Module d'écoulement laminaire (10) selon la revendication 6, dans lequel X1 est l'étendue de la section transversale de canal dans la direction du plan des disques et X2 est l'étendue de la section transversale du canal dans la direction perpendiculaire au plan des disques, avec : X1 > X2.

9. Module d'écoulement laminaire (10) selon l'une quelconque des revendications 1 à 8, dans lequel la hauteur et la largeur des canaux en spirale sont de 0,1 mm ou plus et de moins de 2 mm et dans lequel la longueur des canaux en spirale est comprise entre 3 mm et 300 mm.

10. Module d'écoulement laminaire (10) selon l'une quelconque des revendications 1 à 9, dans lequel le logement (6, 7) comprend une partie en forme de coupelle (6) contenant l'empilement de disques et une partie de couvercle (7) qui ferme la coupelle.

11. Module d'écoulement laminaire selon l'une quelconque des revendications 1 à 10, dans lequel la coupelle et le couvercle (6, 7) contiennent un certain nombre de trous supplémentaires (605, 705) et dans lequel les disques contiennent un certain nombre de trous ou évidements supplémentaires dans leur circonférence (105, 205), dans lequel les trous ou évidements supplémentaires (105, 205) dans la circonférence des disques sont alignés avec lesdits trous supplémentaires dans la coupelle et le couvercle (605, 705) de sorte qu'un canal d'assemblage soit formé, à travers lequel le moyen d'assemblage (9) s'étend, lequel maintient la coupelle et le couvercle ensemble et lequel maintient l'empilement de disques à une position fixe dans le logement (6, 7).

12. Débitmètre comprenant le module d'écoulement laminaire (10) selon l'une quelconque des revendications 1 à 11, de préférence
dans lequel le débitmètre a une configuration dans laquelle deux capteurs de pression (12A, 12B) sont agencés en série via le module d'écoulement laminaire (10) selon l'une quelconque des revendications 1 à 11, et/ou
dans lequel le débitmètre comprend également un capteur de température (18) monté en amont ou en aval du module d'écoulement laminaire (10).

13. Système de réduction catalytique sélective (RCS) comprenant le débitmètre selon la revendication 12, dans lequel ledit débitmètre est en communication avec un régulateur (13) qui est configuré pour recevoir un signal dudit débitmètre d'après le débit dans ledit débitmètre et pour réguler, d'après ledit signal, un système de dosage (19, 20, 21) pour qu'une quantité appropriée de solution d'urée soit injectée dans un échappement d'un moteur en amont d'un convertisseur catalytique.

14. Procédé de détermination du débit d'un fluide comprenant l'orientation dudit fluide à travers un débitmètre selon la revendication 12, la détermination du différentiel de pression à travers ledit module d'écoulement laminaire (10) et la détermination du débit dudit fluide d'après ledit différentiel de pression.

15. Procédé selon la revendication 14, dans lequel le fluide est un liquide, de préférence dans lequel le fluide est un liquide contenant de l'urée, comme une solution d'urée à 15 à 40 % en poids dans de l'eau déminéralisée.

FIG. 1A

FIG. 1B

FIG. 2A

FIG. 2B

FIG. 3

FIG. 4

FIG. 5

EP 3 273 025 B1

FIG. 6

**REFERENCES CITED IN THE DESCRIPTION**

**Patent documents cited in the description**

- GB 1386417 A
- DE 2728697 A1
- US 3851526 A
- DE 102011089502 A1